# EUROPEAN PATENT APPLICATION

(11) **EP 4 585 316 A1**
(43) Date of publication of application: **16.07.2025**
(21) Application number: 23862927.3
(22) Date of filing: 22.08.2023
(51) Int. Cl.: B05C 5/02, B05C 1/04, B05C 9/12, B29B 15/12, C08J 5/24

(54) **SLURRY IMPREGNATED SHEET MANUFACTURING DEVICE**

(30) Priority: 08.09.2022 JP 2022143142; 12.09.2022 JP 2022144335; 13.09.2022 JP 2022145530
(71) Applicant: Toray Industries, Inc., Tokyo 103-8666 (JP)
(72) Inventor: YOSHIOKA, Kohei, Otsu-shi, Shiga 520-8558 (JP); NISHINO, So, Otsu-shi, Shiga 520-8558 (JP); MINOURA, Kiyoshi, Otsu-shi, Shiga 520-8558 (JP)
(74) Representative: Hoefer & Partner Patentanwälte mbB
(86) International application number: PCT/JP2023/030108
(87) International publication number: WO 2024/053388

(57) **Abstract**

Provided is an apparatus for producing a slurry-impregnated sheet capable of producing a slurry-impregnated sheet having a uniform slurry impregnation amount in a high yield. An apparatus for producing a slurry-impregnated sheet of the present invention is an apparatus for producing a slurry-impregnated sheet constituted of a fiber sheet or a porous sheet impregnated with a slurry prepared by dispersing particles in a solvent, the apparatus including: a conveying device configured to convey the fiber sheet or the porous sheet; a coating device configured to meter and apply the slurry to the fiber sheet or the porous sheet; and an impregnation device disposed downstream of the coating device in a sheet conveyance direction and configured to apply an external force to the fiber sheet or the porous sheet to impregnate the fiber sheet or the porous sheet with the particles, in which the coating device includes a die.

## Description

### Field

The present invention relates to an apparatus for producing a slurry-impregnated sheet.

### Background

Fiber-reinforced composite materials (FRP) obtained by reinforcing a matrix resin containing a thermoplastic resin or a thermosetting resin with reinforcing fibers are used in various fields such as aerospace materials, automobile materials, industrial materials, pressure vessels, building materials, housings, medical applications, and sports applications. FRP is produced by impregnating a reinforced-fiber bundle with a matrix resin to obtain an intermediate base-material, laminating and molding the intermediate base-material. When a thermosetting resin is used as the matrix resin, further thermally curing the intermediate base-material to produce a member formed of FRP. For the applications mentioned above, planar objects and folded objects thereof are frequently used. Two-dimensional sheet-like objects are widely used as FRP intermediate base materials in view of lamination efficiency and moldability in producing members.

As a two-dimensional sheet-like intermediate base-material, a prepreg is used, which is formed of a sheet-like reinforcing fiber bundle having reinforcing fibers aligned in one direction, and impregnated with a matrix resin. One of the methods for producing a prepreg is a hot melt method. In this method, a matrix resin is melted and then applied onto release paper. The release paper is sandwiched between the upper surface and the lower surface of sheet-like reinforced fiber bundles to form a laminate structure, and thereafter, heat and pressure are applied to impregnate the sheet-like reinforced fiber bundle with the matrix resin. This method has problems such as a large number of steps, the production rate that cannot be increased, and high cost.

As a method for producing a prepreg other than the hot melt method, a slurry impregnation method is known (see, for example, Patent Literature 1). In this method, a sheet-like reinforcing fiber bundle is impregnated with a slurry containing a powdered resin dispersed in a solvent, followed by removing the solvent.

### Citation List

### Patent Literature

Patent Literature 1: JP 2005-255927 A

### Summary

### Technical Problem

In Patent Literature 1, a prepreg excellent in uniformity is produced by immersing a reinforcing-fiber sheet having strands controlled in width in a slurry containing a thermoplastic resin powder dispersed in an organic solvent such as alcohol to attach the resin powder to the sheet, heating the sheet to dry the organic solvent, and further heating the sheet at a high temperature to melt the thermoplastic resin to integrate into the reinforcing-fiber sheet. However, since fibers constituting a strand are twisted or entangled, it is difficult to control the width of the strand to be constant. In addition, the basis weight of the resin particles to be attached to the reinforcing-fiber sheet varies depending on not only the width of the strand but also the tension during conveyance, the spreading of the strand and the concentration of particles in a slurry tank. For this reason, it is substantially difficult to accurately control the basis weight of the resin particles to be attached to the reinforcing-fiber sheet. Furthermore, in the case of a thick fiber sheet, it was difficult to impregnate the fiber sheet with a resin.

The present invention has been made in consideration of the above problems. An object of the invention is to provide an apparatus capable of producing a slurry-impregnated sheet having a slurry impregnated in a uniform amount in a high yield.

### Solution to Problem

A first apparatus for producing a slurry-impregnated sheet according to the present invention to solve the above problems is an apparatus for producing a slurry-impregnated sheet constituted of a fiber sheet or a porous sheet impregnated with a slurry prepared by dispersing particles in a solvent. The apparatus includes: a conveying device configured to convey the fiber sheet or the porous sheet; a coating device configured to meter and apply the slurry to the fiber sheet or the porous sheet; and an impregnation device disposed downstream of the coating device in a sheet conveying direction and configured to apply an external force to the fiber sheet or the porous sheet to impregnate the fiber sheet or the porous sheet with the particles. The coating device includes a die.

In the first apparatus for producing a slurry-impregnated sheet according to the present invention, the die includes: a slurry supply channel configured to supply the slurry; a manifold configured to communicate with the slurry supply channel and widen the slurry in a width direction of the fiber sheet or the porous sheet; and a slit configured to communicate with the manifold and uniformly discharge the supplied slurry in the width direction, and a flow direction of the slurry passing through the slit is a downward direction at an angle of 45° or less with respect to a vertical direction.

In the first apparatus for producing a slurry-impregnated sheet according to the present invention, an angle formed between a bottom surface of the manifold and the vertical direction is 45° or less.

A second apparatus for producing a slurry-impregnated sheet of the present invention to solve the above problems is an apparatus for producing a slurry-impregnated sheet by impregnating a fiber sheet or a porous sheet with a slurry having particles dispersed in a solvent. The apparatus includes: a conveying device configured to convey the fiber sheet or the porous sheet; a coating device configured to meter and apply the slurry to the fiber sheet or the porous sheet; and an impregnation device disposed downstream of the coating device in a sheet conveying direction and configured to apply an external force to the fiber sheet or the porous sheet to impregnate the fiber sheet or the porous sheet with the particles. In a sheet conveying path from an outlet of the coating device to an outlet of the impregnation device, an angle formed between a horizontal direction and a virtual straight line connecting a center of the outlet of the coating device in a sheet width direction and a center of an inlet of the impregnation device in the sheet width direction, and an angle formed between the horizontal direction and a virtual straight line connecting the center of the inlet of the impregnation device in the sheet width direction and a center of the outlet of the impregnation device in the sheet width direction are 30° or more and 90° or less, and the fiber sheet or the porous sheet is conveyed through the impregnation device downward or obliquely downward in the vertical direction.

The second apparatus for producing the slurry-impregnated sheet according to the present invention further includes a drying device that is disposed downstream of the impregnation device in a conveyance direction of the fiber sheet or the porous sheet and configured to dry at least part of the solvent contained in the slurry. In a sheet conveying path from the impregnation device to the drying device, an angle formed between the horizontal direction and a virtual straight line connecting the center of the outlet of the impregnation device in the sheet width direction and a center of an inlet of the drying device in the sheet width direction, and an angle formed between the horizontal direction and a virtual straight line connecting the center of the inlet of the drying device in the sheet width direction and a center of an outlet of the drying device in the sheet width direction are 30° or more and 90° or less, and the fiber sheet or the porous sheet is conveyed through the drying device downward or obliquely downward in the vertical direction.

The second apparatus for producing slurry-impregnated sheet according to the present invention further includes: a direction-changing roller disposed downstream of the drying device of the fiber sheet or the porous sheet in a conveyance direction and configured tocontrol the angle formed between the horizontal direction and the conveyance direction of the fiber sheet or the porous sheet to be less than 30°; and a second drying device disposed downstream of the direction-changing roller in the conveyance direction of the fiber sheet or the porous sheet and configured to dry a solvent remaining in the fiber sheet or the porous sheet.

Further, in the second apparatus for producing a slurry-impregnated sheet according to the present invention, the coating device of the second apparatus may have the characteristics of the coating device according to the first apparatus for producing a slurry-impregnated sheet.

A third apparatus for producing a slurry-impregnated sheet of the present invention to solve the above problems is an apparatus for producing a slurry-impregnated sheet having a fiber sheet or a porous sheet impregnated with a slurry having particles dispersed in a solvent. The apparatus includes a conveying device configured to independently convey a plurality of fiber sheets or a plurality of porous sheets; a coating device configured to independently meter and apply the slurry to the plurality of fiber sheets or the plurality of porous sheet; and a laminating device disposed downstream of the coating device in the conveyance direction of the fiber sheet and configured to laminate the plurality of fiber sheets or the plurality of porous sheets to form a single slurry-impregnated sheet.

In the third apparatus for producing a slurry-impregnated sheet according to the present invention, the laminating device is configured to laminate the plurality of fiber sheets or the plurality of porous sheets and simultaneously impregnate the plurality of fiber sheets or the plurality of porous sheets with the particles to the inside by applying an external force to the plurality of fiber sheets or the plurality of porous sheets.

The third apparatus for producing a slurry-impregnated sheet according to the present invention further includes a fiber spreader disposed upstream of the coating device in the conveyance direction of the fiber sheet.

In addition, in the third apparatus for producing a slurry-impregnated sheet according to the present invention, the coating device of the third apparatus may have the characteristics of the coating device according to the first apparatus for producing a slurry-impregnated sheet.

### Advantageous Effects of Invention

According to the first apparatus for producing a slurry-impregnated sheet of the present invention, the slurry controlled in concentration can be uniformly applied to, e.g., a fiber sheet in the width direction by a die. Thus, it is possible to produce a slurry-impregnated sheet having, e.g., a fiber sheet impregnated with a slurry in a uniform amount, in a high yield. Since the slurry flows downward and the bottom surface of the manifold is inclined, even if the resin particles precipitate in the die, the resin particles are quickly discharged through the slit, and the resin particles do not deposit within the die to clog the slit. As a result, it is possible to stably produce a slurry-impregnated sheet over a long period of time.

According to the second apparatus for producing slurry-impregnated sheet of the present invention, it is possible to produce a slurry-impregnated sheet having, e.g., a fiber sheet impregnated with a slurry in an uniform amount, in a high yield. Since the fiber sheet, etc., is conveyed at a predetermined angle with respect to the horizontal direction and downward, when an external force is applied to the fiber sheet to impregnate the fiber sheet, etc., with particles, dripping of the slurry from the fiber sheet, etc. can be prevented and the metering and coating properties of the slurry and the yield of particles can be improved.

Furthermore, according to the third apparatus for producing a slurry-impregnated sheet of the present invention, it is possible to produce a slurry-impregnated sheet having, e.g., a fiber sheet impregnated with a slurry in a uniform amount, in a high yield. Moreover, even in the case of producing a thick slurry-impregnated sheet, it is possible to obtain a slurry-impregnated sheet impregnated with the slurry to the inside only by changing the number of fiber sheets to be laminated.

### Brief Description of Drawings

FIG. 1 is a schematic view of an apparatus for producing a slurry-impregnated sheet according to a first embodiment of the present invention.
FIG. 2 is a view illustrating a structure of a die used in the apparatus illustrated in FIG. 1.
FIG. 3 is a schematic view of an apparatus for producing a slurry-impregnated sheet according to a modification of the first embodiment of the present invention.
FIG. 4 is a schematic view of an apparatus for producing a slurry-impregnated sheet according to the second embodiment of the present invention.
FIG. 5 is a schematic view of an apparatus for producing a slurry-impregnated sheet according to Modification 1 of the second embodiment of the present invention.
FIG. 6 is a schematic view of an apparatus for producing a slurry-impregnated sheet according to Modification 2 of the second embodiment of the present invention.
FIG. 7 is a schematic view of an apparatus for producing a slurry-impregnated sheet according to Modification 3 of the second embodiment of the present invention.
FIG. 8 is a schematic view of an apparatus for producing a slurry-impregnated sheet according to Modification 4 of the second embodiment of the present invention.
FIG. 9 is a schematic view of an apparatus for producing a slurry-impregnated sheet not included in the embodiments of the present invention.
FIG. 10 is a schematic view of an apparatus for producing a slurry-impregnated sheet not included in the embodiments of the present invention.
FIG. 11 is a schematic view of an apparatus for producing a slurry-impregnated sheet according to the third embodiment of the present invention.
FIG. 12 is a schematic view of an apparatus for producing a slurry-impregnated sheet according to Modification 1 of the third embodiment of the present invention.
FIG. 13 is a schematic view of an apparatus for producing a slurry-impregnated sheet according to Modification 2 of the third embodiment of the present invention.

### Description of Embodiments

Hereinafter, an apparatus for producing a slurry-impregnated sheet according to the present invention will be described in detail with reference to the drawings.

### [First Embodiment]

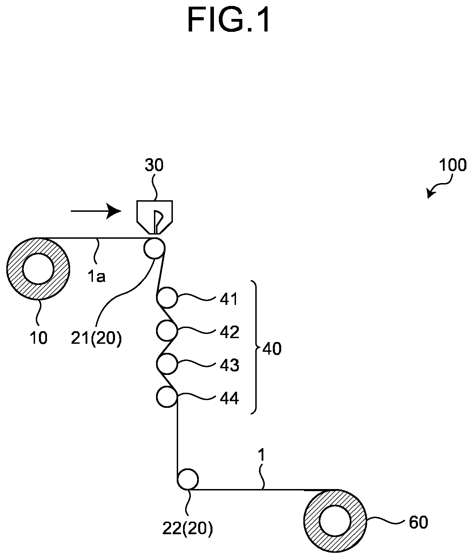

FIG. 1 is a schematic view of an apparatus 100 for producing a slurry-impregnated sheet 1 according to the first embodiment of the present invention. The apparatus 100 for producing the slurry-impregnated sheet 1 of the present invention includes an unwinding device 10 that releases a fiber sheet 1a; a conveying device 20 that conveys the fiber sheet 1a and the slurry-impregnated sheet 1; a coating device 30 that meters and applies a slurry to the fiber sheet 1a; an impregnation device 40 that is disposed downstream of the coating device 30 in the conveying direction of the sheet and applies an external force to the fiber sheet 1a coated with the slurry to impregnate the fiber sheet 1a with particles to the inside; and a winding device 60 that rolls up the slurry-impregnated sheet 1.

### <Fiber Sheet>

Examples of the fiber sheet 1a include a UD tape, which is sheet-like material obtained by aligning fibers in one direction, and a fiber fabric, which is a woven fabric obtained by aligning fibers in various directions. When mechanical characteristics take priority, the UD tape can be preferably used. In contrast, when FRP having a complicated shape is produced, a woven fabric excellent in shaping and shape-following can be preferably used.

In the present embodiment, the fiber sheet 1a is used as an example but the apparatus 100 for producing the slurry-impregnated sheet 1 according to the first embodiment of the present invention can be used also in impregnating a porous sheet with a slurry. Examples of the porous sheet include nonwoven fabric, paper, mesh, sponge, and foamed rubber. Any material may be used as long as it is impregnated with a slurry.

Examples of fibers constituting the fiber sheet 1a include carbon fibers, glass fibers, metal fibers, metal oxide fibers, metal nitride fibers, and organic fibers (such as aramid fiber, polybenzoxazole fiber, polyvinyl alcohol fiber, and polyethylene fiber). When the slurry-impregnated sheet 1 is used for FRP, a carbon fiber is preferably used in consideration of the mechanical characteristics and lightweight of FRP.

The UD tape to be used as the fiber sheet 1a refers to a base-material obtained by aligning a plurality of fibers on a surface in one direction. It is not necessary that plural fibers are integrated by entangling with each other. Since the slurry-impregnated sheet 1 produced by the apparatus 100 for producing the slurry-impregnated sheet 1 of the first embodiment of the present invention is obtained as a sheet-like object obtained by applying a slurry followed by impregnating the sheet with the slurry, a sheet in which fibers are aligned but not integrated is also referred to as a fiber sheet for convenience. Here, the thickness and width of the fiber sheet 1a are not particularly limited, and can be appropriately selected according to the purpose and use. In the case of carbon fibers, generally, a tape-like assembly of about 1,000 to 1,000,000 monofilaments is called "tow". A fiber sheet can be obtained by aligning the tows. However, the tows may be laminated in the thickness direction. The fiber sheet 1a preferably has an aspect ratio (defined by its width/thickness) of 10 or more because it is easy to handle.

As a method for forming the fiber sheet 1a, a known method can be used. Although it is not particularly limited, it is preferable to form the fiber sheet 1a by forming a fiber bundle by aligning monofilaments in advance, and further aligning the fiber bundles, in view of process efficiency and alignment uniformity. For example, in the case of carbon fibers, a tape-like fiber bundle, "tow" is wound around a bobbin. Tape-like fiber bundles are released from the bobbin and aligned to obtain the fiber sheet 1a as a UD tape. Further, in the step of forming the fiber sheet 1a, a fiber aligning mechanism or a fiber spreader is preferably used for orderly aligning fiber bundles released from a bobbin put on a creel and eliminating undesirably overlap or fold of the fiber bundles of the fiber sheet 1a, and the space between the fiber bundles. As the fiber aligning mechanism, e.g., a known roller, a comb-form alignment device can be used. As the fiber spreader, for example, those described in JP 2005-163223 A, JP 2004-225222 A and JP 2004-225183 A can be used. The creel is preferably equipped with a tension control mechanism for controlling the tension when a fiber is released. As the tension control mechanism, a known mechanism can be used. For example, a brake mechanism may be used. The tension can also be controlled, for example, by adjusting the yarn path guide.

The fiber fabric as the fiber sheet 1a is a sheet-like material obtained by aligning fibers multiaxially or at random. Specific examples of the fabric include not only woven fabrics and knitted fabrics but also materials obtained by two-dimensionally aligning fibers multiaxially, and materials obtained by aligning fibers at random such as nonwoven fabrics, mats and paper. In this case, the reinforcing fibers can also be formed into a sheet by means of, e.g., addition of a binder, entanglement, welding, or fusion. Examples of the woven fabric that can be used include not only basic woven fabrics such as plain, twill and satin weaves but also a non-crimp woven fabric, a bias structure, an entangled woven fabric, a multiaxial woven fabric and a multiple woven fabric. The woven fabric having a bias structure and a UD tape in combination is preferable because not only the deformation of the woven fabric caused by stretching in the coating and impregnation step is suppressed by the UD structure, but also the pseudo isotropy is present due to the bias structure. The multiple woven fabric has an advantage that the structures and characteristics of the upper surface/lower surface and the interior of the woven fabric can be separately designed. In the knit fabric, warp knitting is preferable in consideration of stability of configuration in the coating and impregnation step, but a tubular knitted fabric, blade, can also be used.

### <Slurry>

The slurry to be used in the first embodiment of the present invention can be appropriately selected according to the purpose of application. For example, when the slurry is used for producing a sheet-like prepreg, e.g., a mixture or suspension of a matrix-resin particles and a dispersion medium is used.

Examples of the matrix resin that can be used include a thermoplastic resin, a thermosetting resin, and a photocurable resin.

As the thermoplastic resin, a polymer having a bond selected from a carbon-carbon bond, an amide bond, an imide bond, an ester bond, an ether bond, a carbonate bond, a urethane bond, a urea bond, a thioether bond, a sulfone bond, an imidazole bond, and a carbonyl bond in a main chain can be used. Examples of the polymer include polyacrylate, polyolefin, polyamide (PA), aramid, polyester, polycarbonate (PC), polyphenylene sulfide (PPS), polybenzimidazole (PBI), polyimide (PI), polyetherimide (PEI), polysulfone (PSU), polyethersulfone (PES), polyetherketone (PEK), polyetheretherketone (PEEK), polyetherketoneketone (PEKK), polyaryletherketone (PAEK), and polyamideimide (PAI). In fields such as aircraft applications requiring heat resistance, e.g., PPS, PES, PI, PEI, PSU, PEEK, PEKK, and PAEK are suitable. In contrast, in, e.g., industrial applications and automobile applications, polyolefins such as polypropylene (PP), PA, polyester, and PPS are suitable in order to increase molding efficiency. These may be polymers. For low-viscosity and low-temperature coating, oligomers or monomers may be used. Needless to say, these may be copolymerized or can be blended and used as a polymer blend alloy depending on the purpose.

Examples of the thermosetting resin include an epoxy resin, a maleimide resin, a polyimide resin, a resin having an acetylene terminal, a resin having a vinyl terminal, a resin having an allyl terminal, a resin having a nadic acid terminal, and a resin having a cyanate ester terminal. These can be generally used in combination with a curing agent or a curing catalyst. In addition, these thermosetting resins can be appropriately mixed and put in use.

It is also preferable that a mixture of a thermosetting resin and a thermoplastic resin may be used as the matrix resin. The mixture of a thermosetting resin and a thermoplastic resin gives better results than the case of using the thermosetting resin alone. This is because a thermosetting resin can be molded at a low pressure by an autoclave although it is generally brittle as a demerit, whereas it is difficult to mold a thermoplastic resin at a low pressure by an autoclave although the thermoplastic resin is generally tough as a merit. Since they have such contradictory characteristics, if they are used as a mixture, physical properties and moldability can be balanced. When they are used as a mixture, it is preferable that the content of the thermosetting resin is more than 50 mass% in view of mechanical characteristics.

As the particles, particles having a particle diameter of 0.1 µm or more and 1 mm or less can be used in view of adhesion to the fiber sheet 1a and handling. In view of handling and adhesion to the resin, particles having a particle diameter of 1 µm or more and 50 µm or less can be suitably used.

Examples of the dispersion medium of the slurry include organic solvents such as alcohols, glycols, ketones and halogenated hydrocarbons, and water. Mixtures of an organic solvent and water can also be used. Examples of the alcohols include methanol, ethanol, and isopropyl alcohol. Examples of the glycols include methyl cellosolve and ethyl cellosolve. Examples of the ketones include acetone and methyl ethyl ketone. Examples of the halogenated hydrocarbon include methylene chloride and dichloroethane.

The proportion of the particles in the slurry is preferably 1% by mass or more and 50% by mass or less, and more preferably 1% by mass or more and 30% by mass or less.

Various additives can be blended in the slurry as necessary. In particular, as an additive for preventing aggregation of particles and ensuring fluidity of the slurry, a surfactant is generally used. Examples of the surfactant include anionic surfactants such as fatty acid salts represented by, e.g., sodium oleate, sulfonic acid salts such as a sodium alkyl sulfonate, a sodium dialkyl sulfosuccinate, a sodium dialkyl diphenyl ether disulfonate, a sodium alkyl benzene sulfonate, and sodium alkyl naphthalene sulfonate, sulfuric acid ester salts such as a sodium alkyl sulfate, a sodium polyoxyethylene alkyl ether sulfate and a sodium polyoxyethylene alkyl phenyl ether sulfate; nonionic surfactants such as ethylene oxide addition polymerized alkyl phenyl ether, alkyl ether, sorbitan acid ester ether, polyoxypropylene ether, fatty acid diethanol amide, polyoxyethylene monostearate of polyhydric alcohol fatty acid ester type, polyoxyethylene glycol distearate, and polyoxyethylene sorbitan monooleate; and cationic surfactants such as an alkyltrimethylammonium chloride and a dialkyldimethylammonium chloride. Various natural or synthetic polymers such as polyvinyl alcohol, hydroxyethyl cellulose, carboxymethyl cellulose, watersoluble cellulose ether, casein, polyethylene oxide and polyacrylamide acting as protective colloids can be used alone or in combination as a dispersant.

Metal particles or inorganic particles may be added to the slurry. Examples of the metal particles and inorganic particles include silver, copper, gold, aluminum, nickel, iron, silica, and ceramic particles. The average particle size of the metal particles and inorganic particles preferably falls within the range of 1 to 50 µm, more preferably 7 to 40 µm, and still more preferably 10 to 30 µm.

### <Unwinding Device>

The unwinding device 10 releases the fiber sheet 1a. In place of the unwinding device 10, a plurality of creels for releasing the fiber bundle and an alignment device for aligning a plurality of fiber bundles released in one direction to obtain the fiber sheet 1a, may be used.

### <Conveying Device>

The conveying device 20 conveys the fiber sheet 1a and the slurry-impregnated sheet 1 obtained by impregnating the fiber sheet 1a with slurry. The conveying device 20 includes a conveying roller 21 and a conveying roller 22. In the present embodiment, the conveying direction of the fiber sheet 1a is changed by the conveying roller 22 from the downward direction to the rightward direction on paper. However, in place of disposing the conveying roller 22, the winding device 60 may be disposed downward the impregnation device 30 for rolling up the fiber sheet 1a. Known rollers can be used as the conveying roller 21 and the conveying roller 22.

### <Coating Device>

The coating device 30 includes a die 31, a metering pump (not illustrated), and a slurry tank. The coating device 30 meters and applies a slurry to the fiber sheet 1a. Since the coating device 30 can control the amount of slurry to be applied to the fiber sheet 1a by the metering pump, a uniform amount of particles can be applied to the fiber sheet 1a in the longitudinal direction (conveying direction).

Examples of the metering pump to be used include a diaphragm pump, a syringe pump, a screw pump, and a snake pump.

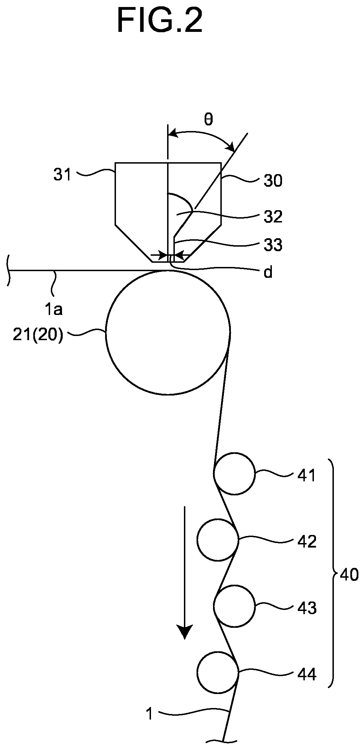

FIG. 2 is a view illustrating the structure of a die 31 used in the apparatus 100 illustrated in FIG. 1. The die 31 includes a slurry supply channel (not illustrated) for supplying slurry, a manifold 32 that communicates with the slurry supply channel and widens the slurry in the width direction (direction perpendicular to the conveyance direction) of the fiber sheet 1a, and a slit 33 that communicates with the manifold 32 and uniformly discharges the supplied slurry in the width direction. The coating device 30 can uniformly apply slurry in the width direction of the fiber sheet 1a from the slit 33 of the die 31.

In the coating device 30 illustrated in FIG. 2, the die 31 is disposed such that the flow direction of the slurry passing through the slit 33 becomes the vertically downward direction. The die 31 may be disposed such that the flow direction of the slurry passing through the slit 33 is the downward direction at an angle of 45° or less with respect to the vertical direction.

The angle θ formed between the bottom surface of the manifold 32 of the die 31 and the vertical direction is preferably 45° or less. As a result, when the slurry is supplied from the manifold 32 to the slit 33, even if the particles in the slurry precipitates, the particles are quickly discharged from the slit 33. As a result, the precipitated particles can be suppressed from remaining in the manifold 32, and the slurry can be stably supplied for a long time without clogging the slit 33.

The gap d of the slit 33 is preferably 2 times or more the average particle diameter of the particles. As a result, the application amount to the fiber sheet 1a can be controlled while preventing clogging of the slit 33 with the particles.

In FIG. 2, the die 31 is disposed closely to the fiber sheet 1a, and slurry is directly applied but the slurry may be applied indirectly via, e.g., a roller or a slope.

Note that, even when the production of the slurry-impregnated sheet is temporarily stopped, it is preferable that the slurry is continuously supplied to the die 31 while separating the die 31 from the fiber sheet 1a. As a result, the slurry circulates within the die 31 to prevent clogging of the slit 33 by excessive precipitation of the particles. At this time, it is preferable that the slurry discharged from the die 31 is recovered and reused.

### <Impregnation Device>

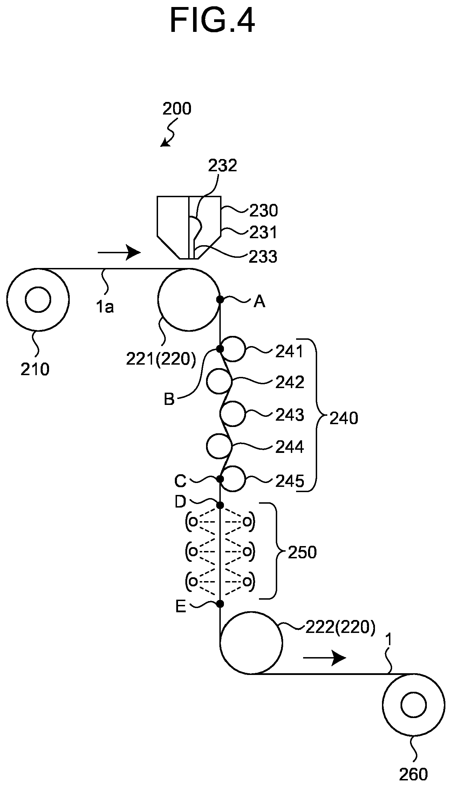

The impregnation device 40 is constituted of a roller 41, a roller 42, a roller 43, and a roller 44. The roller roller 41, roller 42, roller 43, and roller 44 are disposed such that the fiber sheet 1a coated with the slurry travels in an S shape. In the present embodiment, the roller 41, roller 42, roller 43, and roller 44 are disposed in an S shape, but the contact lengths of the sheet with the rollers may be controlled such that the fiber sheet 1a travels in a U shape or a V shape as long as the sheet can be impregnated with a slurry. The roller 41, roller 42, roller 43, and roller 44 may be rotatable rollers such as free rolls or feed rolls, or may be fixed bars. Alternatively, the impregnation device may be constituted of one or more nip rolls, and impregnation may be performed by further applying pressure to the fiber sheet 1a. In addition, when the impregnation pressure of the slurry is increased to further improve the degree of impregnation, opposing contact rolls may be added. Further, as disclosed in FIG. 4 of WO 2015/076981 A, the conveyor belt may be disposed so as to face the rollers disposed in an S shape to improve the impregnation efficiency. Further, an impregnating device disclosed in JP 2017-154330 A or JP 2013-22868 A can also be used. As the impregnation device, a configuration other than the above may be used as long as an external force can be applied to the fiber sheet 1a coated with the slurry to impregnate the sheet with particles to the inside. For example, an air knife can be used.

### <Other Mechanisms>

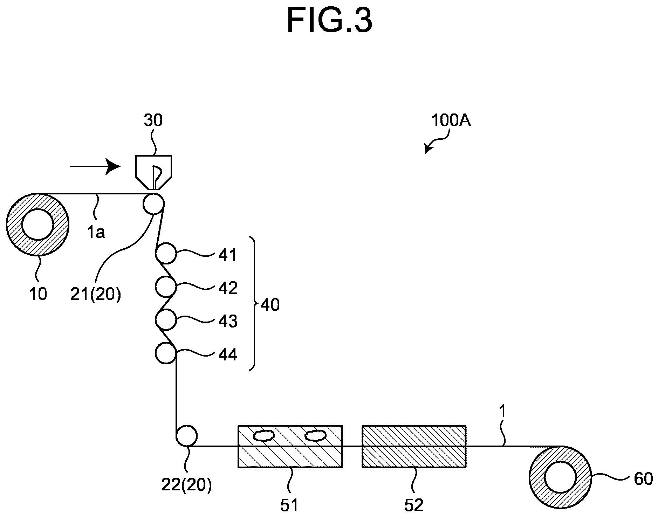

The apparatus 100 for producing the slurry-impregnated sheet 1 according to the first embodiment of the present invention may include a drying device and a melting downstream of the impregnation device 40. FIG. 3 is a schematic view of an apparatus 100 A for producing a slurry-impregnated sheet 1 according to a modification of the first embodiment of the present invention.

A drying device 51 and a melting device 52 can employ various means such as air heating, infrared ray heating, far infrared ray heating, laser heating, contact heating, and heating by a heat medium (e.g., steam). In the example of FIG. 3, heating is performed in two stages using the drying device 51 and the melting device 52, and the melting temperature is preferably higher than the drying temperature.

The manufacturing apparatus 100 for the slurry-impregnated sheet 1 may include a release-sheet supply device. The release-sheet supply device can be disposed such that the release sheet to be supplied is laminated on the slurry-impregnated sheet 1 by the conveying roller 22.

As described above, according to the apparatus for producing a slurry-impregnated sheet according to the first embodiment of the present invention, a slurry-impregnated sheet constituted of a fiber sheet uniformly impregnated with, e.g., resin particles, can be produced in a high yield.

### [Second Embodiment]

FIG. 4 is a schematic view of an apparatus 200 for producing a slurry-impregnated sheet 1 according to the second embodiment of the present invention. The apparatus 200 for producing a slurry-impregnated sheet 1 according to the second embodiment of the present invention includes an unwinding device 210 that releases a fiber sheet 1a, a conveying device 220 that conveys the fiber sheet 1a and the slurry-impregnated sheet 1, a coating device 230 that measures and applies a slurry to the fiber sheet 1a, an impregnation device 240 that is disposed downstream of the coating device 230 in the conveying direction of the fiber sheet 1a and applies an external force to the fiber sheet 1a to impregnate the fiber sheet 1a with particles to the inside, a drying device 250 that is disposed downstream of the impregnation device 240 in the conveying direction of the fiber sheet 1a and dries at least part of a solvent contained in the slurry, and a winding device 260 that rolls up the slurry-impregnated sheet 1.

The impregnation device 240 and the drying device 250 are disposed in the sheet conveying path from the impregnation device 240 to the drying device 250 such that the angle formed between the horizontal direction and a virtual straight line BC which connects the center of the inlet B in the sheet width direction and the center of the outlet C of the impregnation device 240 in the sheet width direction, is 30° or more and 90° or less. Preferably, the impregnation device 240 and the drying device 250 are disposed such that the angle formed between the horizontal direction and a virtual straight line CD which connects the center of the outlet C of the impregnation device 240 in the sheet width direction and the center of the inlet D of the drying device 250 in the sheet width direction and the angle formed between the horizontal direction and a virtual straight line DE which connects the center of the inlet D of the drying device 250 in the sheet width direction and the center of the outlet E thereof in the sheet width direction are 30° or more and 90° or less. Herein, the inlet B of the impregnation device 240 is a site where an external force is applied first to the fiber sheet 1a for impregnation of particles, and the outlet C of the impregnation device 240 is a site where an external force is applied finally to the fiber sheet 1a for impregnation of particles. Note that, the impregnation device 240 is disposed between the coating device 230 and the drying device 250 and applies an external force to the fiber sheet 1a. Even if a conveying roller 222 in FIG. 4 applies an external force to the fiber sheet 1a, it is not included in the impregnation device 240. The inlet D of the drying device 250 is a site where application of, e.g., heat or infrared rays to the fiber sheet 1a for drying the solvent is initiated, whereas the outlet E of the drying device 250 is a site where application of, e.g., heat or infrared rays to the fiber sheet 1a for drying the solvent is terminated.

The impregnation device 240 is effective in impregnating the fiber sheet 1a with particles to the inside by applying an external force to the fiber sheet 1a, but at the same time, the slurry exudes from the surface of the fiber sheet 1a. In the embodiment illustrated in FIG. 4, the impregnation device 240 and the drying device 250 are disposed such that the angle formed between the horizontal direction and the fiber sheet 1a from the inlet B of the impregnation device 240 to the outlet E of the drying device 250 is 30° or more and 90° or less. As a result, the slurry exuding onto the surface of the fiber sheet 1a remains on the surface of the fiber sheet 1a by the action of gravity without dipping. Since the fiber sheet 1a keeping the slurry thereon passes through the drying device 250, the solvent is dried. As a result, dripping of the slurry can be prevented even in a process (e.g., the conveying roller 222) downstream of the drying device 250. As a result, the entire amount of the particles applied by the coating device 230 remains in the slurry-impregnated sheet 1. Not only the basis weight of the slurry in the slurry-impregnated sheet 1 can be easily controlled but also the yield of the particles is improved. In view of conveying the fiber sheet 1a while keeping the slurry exuding in the impregnation device 240 on the surface thereof, it is preferable to dispose individual devices such that the direction of gravity is aligned with the conveying direction of the fiber sheet 1a, in other words, the fiber sheet 1a is conveyed through the impregnation device 240 and the drying device 250 downwardly or obliquely downwardly along the vertical direction. Herein, obliquely downward refers to downward with respect to the horizontal direction, preferably a direction at an angle of 60° or less with respect to the vertical direction.

In the apparatus 200 for producing the slurry-impregnated sheet 1 illustrated in FIG. 4, the impregnation device 240 and the drying device 250 are disposed such that the angle formed between the horizontal direction and a virtual straight line BC which connects the center of the inlet B of the impregnation device 240 and the center of the outlet C thereof in the sheet width direction and the angle formed between the horizontal direction and a virtual straight line DE which connects the center of the inlet D of the drying device 250 and the center of the outlet E thereof in the sheet width direction become both about 90°. However, as long as the angle is 30° or more and 90° or less, dripping of slurry from the slurry-impregnated sheet 1 can be prevented.

Note that, in view of preventing dripping of the slurry from the fiber sheet 1a or the slurry-impregnated sheet 1, in the sheet conveying path from the coating device 230 to the impregnation device 240, the angle formed between the horizontal direction and a virtual straight line AB which connects the center of the outlet A of the coating device 230 in the sheet width direction and the center of the inlet B of the impregnation device 240 in the sheet width direction, is also preferably 30° or more and 90° or less.

### <Fiber Sheet>

As the fiber sheet 1a used in the second embodiment, the same type of fiber sheet as the fiber sheet 1a used in the first embodiment can be used.

### <Slurry>

The slurry to be used in the second embodiment can be the same slurry as used in apparatus 100 for producing the slurry-impregnated sheet according to the first embodiment.

### <Unwinding Device>

The unwinding device 210 releases the fiber sheet 1a. In place of the unwinding device 210, a plurality of creels for releasing the fiber bundle and an alignment device for aligning a plurality of fiber bundles released in one direction to obtain the fiber sheet 1a may be used.

### <Conveying Device>

The conveying device 220 conveys the fiber sheet 1a and the slurry-impregnated sheet 1 obtained by impregnating the fiber sheet 1a with slurry. The conveying device 220 includes a conveying roller 221 and a conveying roller 222. In the second embodiment of the present invention, the conveying direction of the fiber sheet 1a is changed by the conveying roller 222 from the downward direction to the rightward direction on paper. However, in place of disposing the conveying roller 222, the winding device 260 may be disposed downward the impregnation device 240 for rolling up the fiber sheet 1a. Known rollers can be used as the conveying roller 221 and the conveying roller 222.

### <Coating Device>

The coating device 230 measures and applies a slurry to the fiber sheet 1a. The coating device 230 is satisfactory as long as it can measure and apply slurry to the fiber sheet 1a. For example, a die coater, a roll coater, a knife coating, a spray coating or a bar coating can be used. In FIG. 4, a die coater is used as the coating device 230. The coating device 230 includes a die 231, a metering pump (not illustrated), and a slurry tank. Since the coating device 230 can control the application amount of slurry to the fiber sheet 1a by the metering pump, a uniform amount of particles can be applied in the longitudinal direction (conveying direction) of the fiber sheet 1a.

Examples of the metering pump to be used include a diaphragm pump, a syringe pump, a screw pump, and a snake pump.

The die 231 includes a slurry supply channel (not illustrated) for supplying slurry, a manifold 232 that communicates with the slurry supply channel and widens the slurry in the width direction (direction perpendicular to the conveyance direction) of the fiber sheet 1a, and a slit 233 that communicates with the manifold 232 and uniformly discharges the supplied slurry in the width direction. The coating device 230 can uniformly apply the slurry in the width direction of the fiber sheet 1a from the slit 233 of the die 231. In FIG. 4, the die 231 is disposed closely to the fiber sheet 1a, and slurry is directly applied but the slurry may be applied indirectly via, e.g., a roller or a slope.

In the coating device 230, the die 231 is disposed such that the flow direction of the slurry passing through the slit 233 is the vertically downward direction, but the die 231 may be disposed such that the flow direction of the slurry passing through the slit 233 is the downward direction at an angle of 45° or less with respect to the vertical direction. When the slurry flows the vertically downward direction, even if the particles in the slurry precipitate when the slurry is supplied from the manifold 232 to the slit 233, the particles are quickly discharged from the slit 233. As a result, the precipitated particles can be suppressed from remaining in the manifold 232, and the slurry can be stably supplied for a long time without clogging the slit 233.

The gap of the slit 233 is preferably 2 times or more the average particle diameter of the particles. As a result, the application amount to the fiber sheet 1a can be controlled while preventing clogging of the slit 233 with particles.

Other than the characteristics mentioned above, the coating device 230 may have the characteristics of the coating device 30 according to the slurry-impregnated sheet manufacturing apparatus 100 of the first embodiment.

### <Impregnation Device>

The impregnation device 240 constituted of a roller 241, a roller 242, a roller 243, a roller 244 and a roller 245. The roller 241, roller 242, roller 243, roller 244, and roller 245 are disposed such that the fiber sheet 1a coated with the slurry travels in an S shape. The fiber sheet 1a coated with the slurry is conveyed between the roller 241, roller 242, roller 243, roller 244, and roller 245 to impregnate the fiber sheet 1a with the particles in the slurry. In the present embodiment, the roller 241, roller 242, roller 243, roller 244 and roller 245 are disposed in an S shape, but the contact lengths of the sheet with the rollers may be controlled such that the fiber sheet 1a travels in a U shape or a V shape as long as the sheet can be impregnated with a slurry. The roller 241, roller 242, roller 243, roller 244 and roller 245 may be rotatable rollers such as free rolls or feed rolls, or may be fixed bars. Alternatively, the impregnation device may be constituted of one or more nip rolls, and impregnation may be performed by further applying pressure to the fiber sheet 1a. In addition, when the impregnation pressure of the slurry is increased to further improve the degree of impregnation, opposing contact rolls may be added. Further, as disclosed in FIG. 4 of WO 2015/076981 A, the conveyor belt may be disposed so as to face the rollers disposed in an S shape to improve the impregnation efficiency. Furthermore, a plurality of fiber sheets 1a coated with slurry may be passed between squeezing blades equipped with an ultrasonic generator described in JP 2017-154330 A to impregnate the fiber sheet 1a with particles.

### <Drying Device>

The drying device 250 is used to dry at least part of the solvent contained in the slurry impregnated in the slurry-impregnated sheet 1. The drying device 250 can employ various means such as air heating, infrared ray heating, far infrared ray heating, laser-heating, contact heating, and heating by heat medium (e.g., steam). The drying device 250 is used for preventing dripping of the slurry from the slurry-impregnated sheet 1, and is sufficient as long as it has an ability to dry at least part of the solvent contained in the slurry.

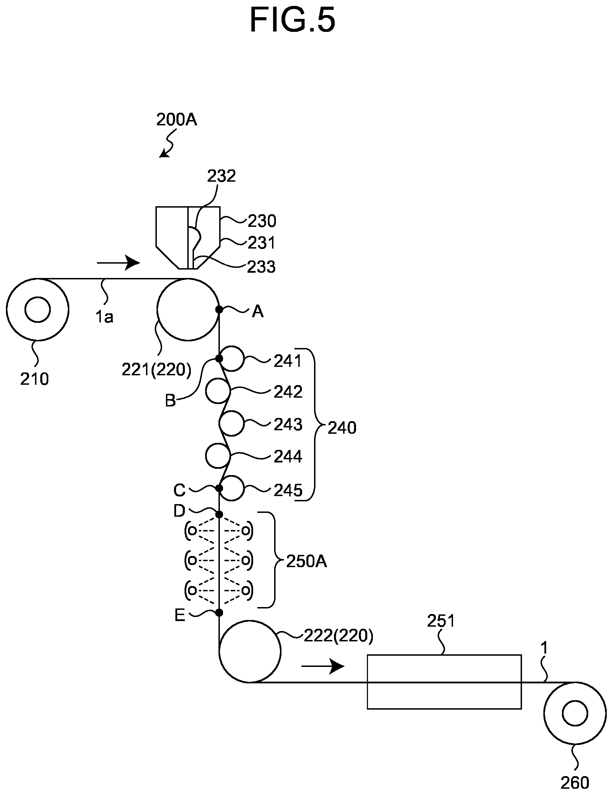

The embodiment of FIG. 4 illustrates a case where the entire amount of the solvent is dried by the drying device 250. However, as illustrated in FIG. 5, the solvent may be only partly dried by a first drying device 250A, and the remaining solvent may be dried by a second drying device 251 disposed between the conveying roller 222 and the winding device 260. At this time, in the first drying device 250A, the solvent may be dried to the extent that the slurry does not drip when the direction of the slurry-impregnated sheet 1 is changed by the conveying roller 222. As a result, the distance of a path required for drying by the first drying device 250A can be suppressed to a minimum, and a height of an entire device 200A for producing a slurry-impregnated sheet can be suppressed low. In general, it is more preferable that the manufacturing equipment is longer in the horizontal direction than in the height direction because the equipment cost is lower. In particular, when the conveyance speed of the slurry-impregnated sheet is high, the distance of a path required for drying by the drying device 250 increases. For the reason, it is preferable to divide the drying device into two stages as illustrated in FIG. 5 in view of cost reduction. The methods of drying by the first drying device 250A and the second drying device 251 may be the same as or different from that by the drying device 250.

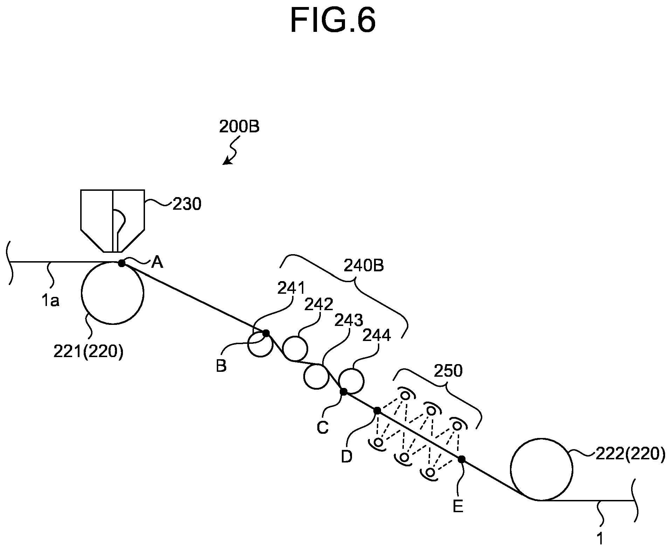

FIG. 6 is a schematic view of an apparatus 200B for producing a slurry-impregnated sheet according to Modification 2 of the second embodiment of the present invention. In the apparatus 200B, an impregnation device 240B and a drying device 250 are disposed such that the angle formed between the horizontal direction and a virtual straight line BC which connects the center of the inlet B of the impregnation device 240B in the sheet width direction and the center of the outlet C thereof in the sheet width direction, the angle formed between the horizontal direction and a virtual straight line CD which connects the center of the outlet C of the impregnation device 240B in the sheet width direction and the center of the inlet D of the drying device 250 in the sheet width direction, and the angle formed between the horizontal direction and a virtual straight line DE which connects the center of the inlet D of the drying device 250 in the sheet width direction and the center of the outlet E thereof in the sheet width direction become about 30°. The impregnation device 240B and the drying device 250 are disposed such that the angle formed between the horizontal direction and a virtual straight line AB which connects the center of the outlet A of the coating device 230 in the sheet width direction and the center of the inlet B of the impregnation device 240B in the sheet width direction becomes also about 30°. In the apparatus 200B, since the angle formed between the horizontal direction and the transport path of the fiber sheet 1a from the inlet B of the impregnation device 240B to the outlet E of the drying device 250 is 30° or more and 90° or less, the slurry exuding from the fiber sheet 1a in the impregnation device 240B flows along the fiber sheet 1a and stays on the surface of the fiber sheet 1a. As a result, dripping of the slurry from the slurry-impregnated sheet 1 can be prevented.

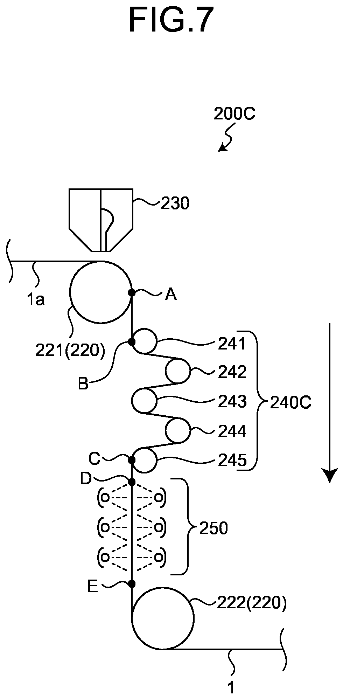

FIG. 7 is a schematic view of an apparatus 200C for producing a slurry-impregnated sheet according to Modification 3 of the second embodiment of the present invention. In the apparatus 200C, the roller 241, roller 242, roller 243, roller 244 and roller 245 constituting an impregnation apparatus 240C are disposed at a distance to the left and right such that the contact length of the fiber sheet 1a with the rollers becomes long. With such arrangement of the rollers, the angles formed between the fiber sheet 1a and the horizontal direction between the roller 241 and the roller 242, between the roller 242 and the roller 243, between the roller 243 and the roller 244, and between the roller 244 and the roller 245 become smaller than 30°. However, the distances between the individual rollers are still short. Thus, even if the contact length between the fiber sheet 1a and the rollers is increased as in the apparatus 200C, and even if a portion where the fiber sheet 1a is conveyed at an angle of less than 30° with respect to the horizontal directions is partially present, if the angles formed between the horizontal direction and the virtual straight line BC, the virtual straight line CD, and the virtual straight line DE, which connect the center of the inlet B of the impregnation apparatus 240C in the sheet width direction, the center of the outlet C of the impregnation apparatus 240C in the sheet width direction, the center of the inlet D of the drying device 250 in the sheet width direction, and the center of the outlet E of the drying device 250 in the sheet width direction, respectively, is about 90°, that is, 30° or more and 90° or less as illustrated in FIG. 7, dripping of the slurry from the slurry-impregnated sheet 1 can be prevented.

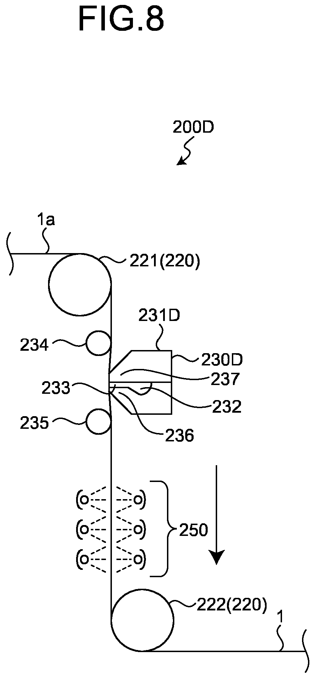

FIG. 8 is a schematic view of an apparatus 200D for producing a slurry-impregnated sheet according to Modification 4 of the second embodiment of the present invention. The manufacturing apparatus 200D includes a coating and impregnation apparatus 230D including a push-in die 231D capable of metering and applying the slurry to the fiber sheet 1a and impregnating the fiber sheet 1a with the slurry, in place of the coating device 230 and the impregnation device 240 of the apparatus 200 of the second embodiment.

The coating and impregnation apparatus 230D includes a push-in die 231D, a guide roller 234, and a guide roller 235. As a structure of the push-in die 231D, for example, a structure of a die including a doctor edge portion and a back edge portion described in JP H01-34663 can be used. The coating and impregnation device 230D is provided to face the fiber sheet 1a provided bendably in the thickness direction between the guide roller 234 and the guide roller 235, such that the protruding surfaces of the doctor edge 236 and the back edge 237 of the push-in die 231D are pressed against the surface of the fiber sheet 1a to discharge the slurry from the slit 233. In the coating and impregnation apparatus 230D, the slurry is metered and applied to the fiber sheet 1a at the portion of the slit 233, and the fiber sheet 1a is impregnated with the particles to the inside by the pressure (external force) generated between the doctor edge 236 disposed downstream of the slit 233 in the conveyance direction and the fiber sheet 1a. As described above, even if the coating device 230 and the impregnation device 240 are integrated like the coating and impregnation device 230D, as long as the impregnation is performed downstream of the application site in the conveying direction, the effect of the present invention can be exerted.

Also in the coating and impregnation apparatus 230D, the angle formed between the horizontal direction and the virtual straight line which connects the center of the inlet of the coating and impregnation apparatus 230D in the sheet width direction and the center of the outlet thereof in the sheet width direction, the angle formed between the horizontal direction and the virtual straight line which connects the center of the outlet of the coating and impregnation apparatus 230D in the sheet width direction and the center of the inlet of the drying device 250, and the angle formed by the horizontal direction and the virtual straight line which connects the center of the inlet of the drying device 250 in the sheet width direction and the center of the outlet thereof in the sheet width direction are about 90°, that is, 30° or more and 90° or less, as illustrated in FIG. 8. Thus, dripping of the slurry from the slurry-impregnated sheet 1 can be prevented.

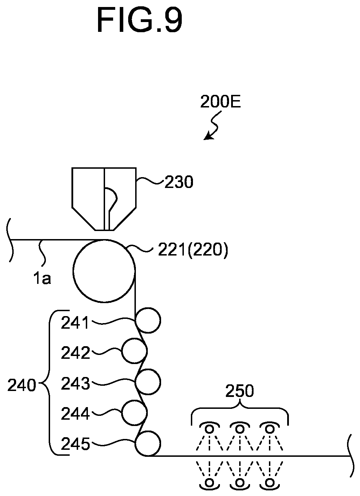

FIG. 9 is a schematic view of an apparatus 200E for producing a slurry-impregnated sheet not included in the embodiments of the present invention. In the manufacturing apparatus 200E, the impregnation device 240 is disposed such that the angle formed by the horizontal direction and the virtual straight line which connects the center of the inlet of the impregnation device 240 in the sheet width direction and the center of the outlet in the sheet width direction is about 90°, but the drying device 250 is disposed such that the angle formed between the horizontal direction and the virtual straight line which connects the center of the outlet of the impregnation device 240 in the sheet width direction and the center of the inlet of the drying device 250 in the sheet width direction and the angle formed between the horizontal direction and the virtual straight line which connects the center of the inlet of the drying device 250 in the sheet width direction and the center of the outlet thereof in the sheet width direction are about 0°. In this arrangement, before the solvent is dried from the slurry-impregnated sheet 1 in the drying device 250, the slurry drips from the roller 245 disposed at the lowermost part of the impregnation device 240 and the fiber sheet 1a in the drying device 250, with the result that the basis weight of slurry cannot be controlled.

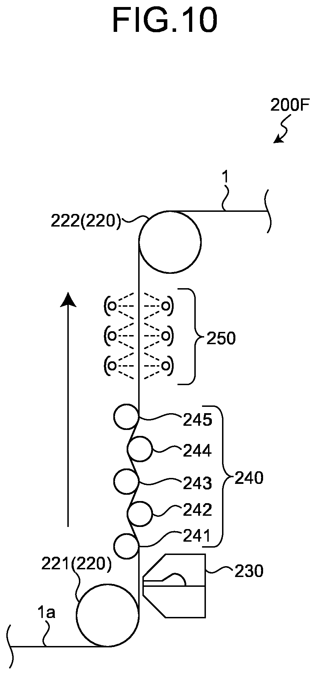

FIG. 10 is a schematic view of an apparatus 200F for producing a slurry-impregnated sheet not included in the embodiments of the present invention. In the manufacturing apparatus 200 F, the impregnation device 240 and the drying device 250 are disposed such that the angle formed between the horizontal direction and the virtual straight line which connects the center of the inlet of the impregnation device 240 in the sheet width direction and the center of the outlet thereof in the sheet width direction, the angle formed between the horizontal direction and the virtual straight line which connects the center of the outlet of the impregnation device 240 in the sheet width direction and the center of the inlet of the drying device 250 in the sheet width direction, and the angle formed between the horizontal direction and the virtual straight line which connects the center of the inlet of the drying device 250 in the sheet width direction and the center of the outlet thereof in the sheet width direction become about 90°, but the fiber sheet 1a is conveyed upward in the vertical direction within the impregnation device 240 and the drying device 250. In the embodiment of FIG. 10, the slurry exuding onto the surface of the fiber sheet 1a in the impregnation device 240 drips outside the fiber sheet 1a via the coating device 230 and the conveying roller 221 by the action of gravity.

### <Other Mechanisms>

The apparatuses 200, 200A, 200B, 200C, and 200D for producing the slurry-impregnated sheet 1 according to the second embodiment of the present invention may include a melting device downstream of the drying device 250 or the second drying device 251. The melting device can employ various means such as air heating, infrared ray heating, far infrared ray heating, laser-heating, contact heating, and heat medium heating (e.g., steam). The melting temperature is preferably higher than the heating temperature.

As described above, according to the apparatus for producing a slurry-impregnated sheet according to the second embodiment of the present invention, a high-quality slurry-impregnated sheet constituted of a fiber sheet uniformly impregnated with, e.g., resin particles, can be produced in a high yield.

### [Third Embodiment]

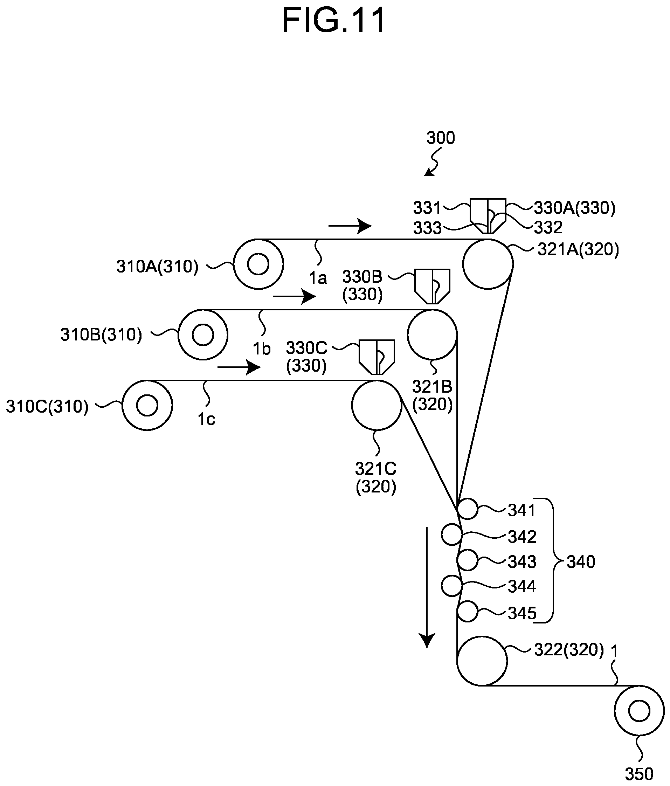

FIG. 11 is a schematic view of an apparatus 300 for producing a slurry-impregnated sheet 1 according to the third embodiment of the present invention. The apparatus 300 for producing a slurry-impregnated sheet 1 of the present invention includes an unwinding device 310 that releases fiber sheets 1a to 1c, a conveying device 320 that conveys the fiber sheets 1a to 1c and the slurry-impregnated sheet 1, a coating device 330 that meters and applies a slurry to the fiber sheets 1a to 1c, a laminating device 340 that is disposed downstream of the a coating device 330 in a sheet conveyance direction and laminates a plurality of fiber sheets 1a to 1c having the slurry applied thereto to form a single slurry-impregnated sheet 1, and a winding device 350 that rolls up the slurry-impregnated sheet 1. Note that, in the third embodiment of the present invention, an apparatus for laminating three fiber sheets 1a to 1c is described, but the present invention is not limited thereto. Any apparatus may be used as long as two or more fiber sheets are laminated to provide a slurry-impregnated sheet.

### <Fiber Sheet>

The fiber sheets 1a to 1c can be the same fiber sheets as those used in apparatus 100 for producing the slurry-impregnated sheet according to the first embodiment.

### <Slurry>

The slurry to be used in the present invention can be the same slurry as used in apparatus 100 for producing the slurry-impregnated sheet according to the first embodiment.

In the third embodiment of the present invention, it is intended to impregnate the three fiber sheets 1a to 1c with the slurry having the same composition, but the present invention is not limited thereto. For example, it is also possible to produce a slurry-impregnated sheet by applying slurries having different compositions to the fiber sheet 1b serving as an inner layer and to the fiber sheets 1a and 1c serving as outer layers, respectively and laminating them. In this manner, for example, conductive particles or resin particles having a low melting point and excellent adhesiveness can be placed only on the surface of the slurry-impregnated sheet to produce a slurry-impregnated sheet having more excellent functionality.

### <Unwinding Device>

The unwinding device 310 releases the fiber sheets 1a to 1c. In the third embodiment of the present invention, three fiber sheets 1a to 1c are fed out by an unwinding device 310A, an unwinding device 310B, and an unwinding device 310 C, respectively. In place of the unwinding device 310, a plurality of creels for releasing a fiber bundle and an alignment device for aligning a plurality of fiber bundles released in one direction to obtain the fiber sheets 1a to 1c may be used.

### <Conveying Device>

The conveying device 320 conveys the fiber sheets 1a to 1c and the slurry-impregnated sheet 1 obtained by impregnating the fiber sheets 1a to 1c with slurry. The conveying device 320 includes a conveying roller 321 A, a conveying roller 321B, and a conveying roller 321 C that convey the three fiber sheets 1a to 1c, respectively, and a conveying roller 322 that conveys the slurry-impregnated sheet 1 obtained by impregnating the fiber sheets 1a to 1c with slurry. In the present embodiment, the conveying direction of the slurry-impregnated sheet 1 is changed by the conveying roller 322 from the downward direction to the rightward direction on paper. However, in place of disposing the conveying roller 322, the winding device 350 may be disposed downward the laminating device 340 for rolling up the slurry-impregnated sheet 1. Known rollers can be used as conveying rollers 321A to 321C and the conveying roller 322.

### <Coating Device>

The coating device 330 meters and applies a slurry to the fiber sheets 1a to 1c. In the third embodiment of the present invention, a slurry is metered and applied to the fiber sheets 1a to 1c by a coating device 330A, a coating device 330B, and a coating device 330C, respectively. The coating device 330 is satisfactory as long as it can measure and apply a slurry to the fiber sheets 1a to 1c. For example, a die coater, a roll coater, a knife coating, a spray coating or a bar coating can be used. In FIG. 11, a die coater is used as the coating device 330. Each of the coating device 330A, coating device 330B, and coating device 330C each includes a die 331, a metering pump, and a slurry tank (both not illustrated). Since the coating device 330A, coating device 330B, and coating device 330C can control the application amount of slurry to the fiber sheets 1a to 1c by the metering pump, a uniform amount of particles can be applied to the fiber sheet 1a in the longitudinal direction (conveying direction).

Examples of the metering pump to be used include a diaphragm pump, a syringe pump, a screw pump, and a snake pump.

The die 331 includes a slurry supply channel (not illustrated) for supplying slurry, a manifold 332 that communicates with the slurry supply channel and widens the slurry in the width direction (direction perpendicular to the conveyance direction) of the fiber sheets 1a to 1c, and a slit 333 that communicates with the manifold 332 and uniformly discharges the supplied slurry in the width direction. The coating device 330A, coating device 330B, and coating device 330C can uniformly apply the slurry in the width direction of the fiber sheets 1a to 1c from the slit 333 of the die 331. In FIG. 11, the die 331 is disposed closely to the fiber sheets 1a to 1c and slurry is directly applied but the slurry may be applied indirectly via, e.g., a roller or a slope.

In the coating device 330A, coating device 330B, and coating device 330C illustrated in FIG. 11, the die 331 is disposed such that the direction of the slurry passing through the slit 333 is the vertically downward direction, but the die 331 may be disposed such that the flow direction of the slurry passing through the slit 333 is the downward direction at an angle of 45° or less with respect to the vertical direction. When the slurry flows the vertical direction, even if particles in the slurry precipitate when the slurry is supplied from the manifold 332 to the slit 333, the particles are quickly discharged from the slit 333. As a result, the precipitate particles can be suppressed from remaining in the manifold 332 and the slurry can be stably supplied for a long time without clogging the slit 333.

The gap of the slit 333 is preferably 2 times or more the average particle diameter of the particles. As a result, the application amounts to the fiber sheets 1a to 1c can be controlled while preventing clogging of the slit 333 with particles.

Other than the characteristics mentioned above, the coating device 330 may have the characteristics of the coating device 30 according to the slurry-impregnated sheet manufacturing apparatus 100 of the first embodiment.

### <Laminating Device>

The laminating device 340 is constituted of a roller 341, a roller 342, a roller 343, a roller 344, and a roller 345. The roller 341, roller 342, roller 343, roller 344, and roller 345 are disposed such that the fiber sheets 1a to 1c coated with slurry travel in an S shape. The three fiber sheets 1a to 1c coated with slurry are laminated by being conveyed through the roller 341, roller 342, roller 343, roller 344, and roller 345. Further, the fiber sheets 1a to 1c are impregnated with particles contained in the slurry by conveying the fiber sheets 1a to 1c coated with the slurry between the roller 341, roller 342, roller 343, roller 344, and roller 345. In the third embodiment of the present invention, the roller 341, roller 342, roller 343, roller 344, and roller 345 are disposed in an S shape, but the contact lengths of the sheets with the rollers may be controlled such that the fiber sheets 1a travel in a U shape or a V shape as long as the fiber sheets 1a to 1c can be laminated and impregnated with a slurry. The roller 341, the roller 342, roller 343, roller 344, and roller 345 may be rotatable rollers such as free rolls or feed rolls, or may be fixed bars. Alternatively, the laminating device may be constituted of one or more nip rolls, and lamination and impregnation may be performed by further applying pressure to the fiber sheets 1a to 1c. In addition, when the impregnation pressure of the slurry is increased to further improve the degree of impregnation, opposing contact rolls may be added. Further, as disclosed in FIG. 4 of WO 2015/076981 A, the conveyor belt may be disposed so as to face the rollers disposed in an S shape to improve the impregnation efficiency. Furthermore, the fiber sheets 1a to 1c coated with slurry may be passed between squeezing blades equipped with an ultrasonic generator described in JP 2017-154330 A to laminate and impregnate the fiber sheets 1a to 1c with particles.

In the third embodiment of the present invention, the lamination of the fiber sheets 1a to 1c and the impregnation of the fiber sheets 1a to 1c with the particles are simultaneously performed by the laminating device 340, but the present invention is not limited thereto. After individual fiber sheets 1a to 1c are impregnated with a slurry by a roller or the like as mentioned above, a plurality of fiber sheets 1a to 1c impregnated slurry are laminated to produce a slurry-impregnated sheet.

### <Other Mechanisms>

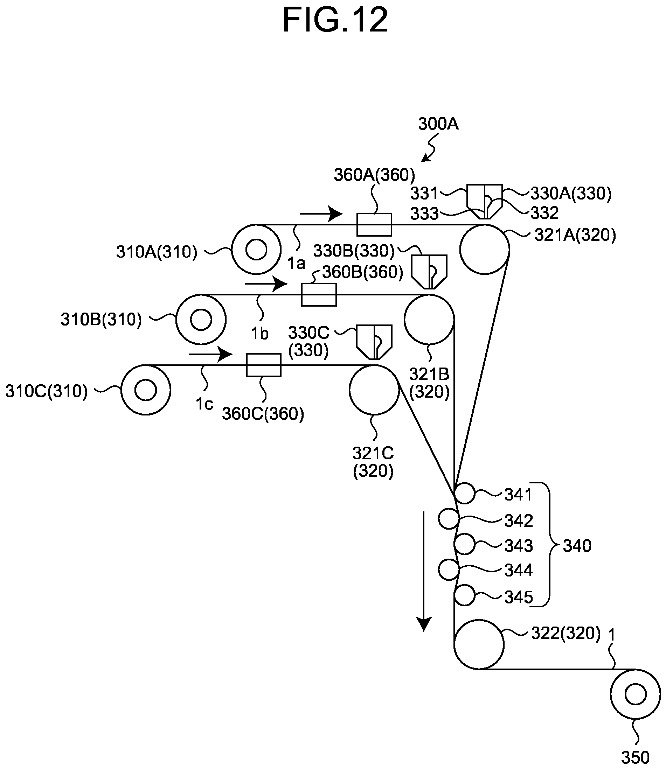

The apparatus 300 for producing the slurry-impregnated sheet 1 according to the third embodiment of the present invention may include a fiber spreader upstream of the coating device 330. FIG. 12 is a schematic view of an apparatus 300A for producing a slurry-impregnated sheet 1 according to Modification 1 of the third embodiment of the present invention.

In the manufacturing apparatus 300A for the slurry-impregnated sheet 1, the fiber sheets 1a to 1c fed out from the unwinding device 310A, unwinding device 310B, and unwinding device 310C are spread by a fiber spreader 360A, a fiber spreader 360B, and a fiber spreader 360 C, respectively. In particular, when the fiber sheets 1a to 1c are UD tape in which a plurality of fiber bundles (tows) are aligned on a surface in one direction, a space may be present between adjacent tows by dividing the plural tows into a plurality of layers, but the space between the fiber sheets 1a to 1c is eliminated, by spreading the fiber sheets 1a to 1c, with the result that more uniform application and impregnation of slurry to the fiber sheets 1a to 1c can be performed. The method of spreading and widening the fiber sheets 1a to 1c is not particularly limited, but mechanically applying vibration and widening fibers by an air flow can be mentioned as the method. Examples of a method of mechanically applying vibration include a method of bringing fiber sheets 1a to 1c into contact with a vibrating roll as described in JP 2017-528606 A. As the vibration direction, assuming that the traveling direction of the fiber sheets 1a to 1c is the X axis, it is preferable to apply vibration in the Y axis direction (horizontal direction) and the Z axis direction (vertical direction). Also a horizontal vibration roll and a vertical vibration roll are preferably used in combination. In addition, it is preferable to provide a plurality of protrusions on the surface of the vibrating roll because abrasion of the reinforcing fibers on the roll can be suppressed. As the method using an air flow, for example, the method described in SEN-I GAKKAISHI, vol. 64, P-262-267 (2008) can be used.

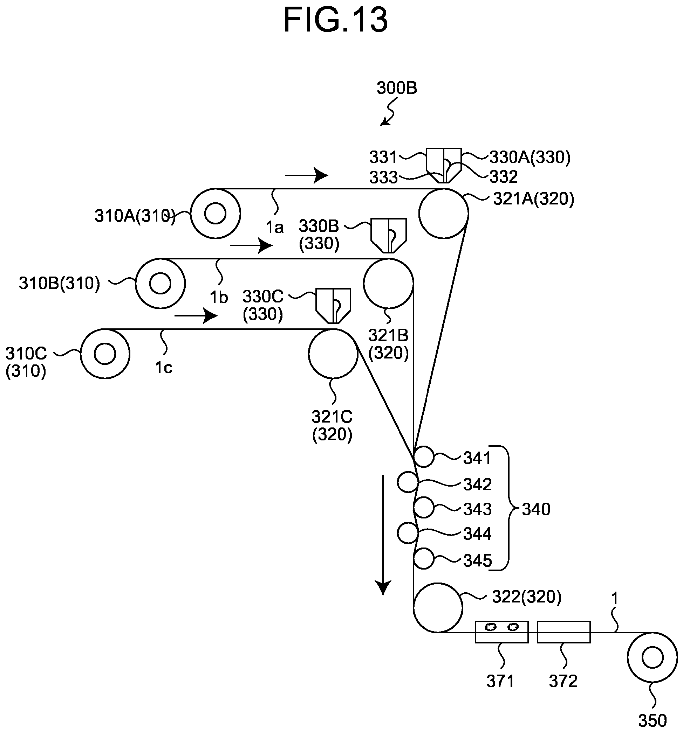

The apparatus 300 for producing the slurry-impregnated sheet 1 according to the third embodiment of the present invention may include a drying device and a melting device downstream of the laminating device 340. FIG. 13 is a schematic view of an apparatus 300B for producing a slurry-impregnated sheet 1 according to Modification 2 of the third embodiment of the present invention.

An drying device 371 and a melting device 372 can employ various means such as air heating, infrared ray heating, far infrared ray heating, laser-heating, contact heating, and heating medium heating (e.g., steam). In the example of FIG. 13, heating is performed in two stages by the drying device 371 and the melting device 372, and the melting temperature is preferably higher than the heating temperature.

The manufacturing apparatus 300 for the slurry-impregnated sheet 1 may include a release sheet supply device. The release sheet supply device can be disposed such that the release sheet to be supplied is laminated on the slurry-impregnated sheet 1 by the conveying roller 322.

As described above, according to the apparatus for producing a slurry-impregnated sheet according to the third embodiment of the present invention, a slurry-impregnated sheet constituted of a fiber sheet uniformly impregnated with, e.g., resin particles can be produced in a high yield. In addition, even in the case of producing a thick slurry-impregnated sheet, it is possible to obtain a slurry-impregnated sheet impregnated with particles to the inside only by changing the number of sheets to be laminated.

### Industrial Applicability

The present invention is useful for producing FRP used for, e.g., aerospace applications, structural materials and interior materials for e.g., automobiles, trains, and ships, pressure vessels, industrial materials, sports materials, medical devices, civil engineering and construction applications.

### Reference Signs List

1 SLURRY-IMPREGNATED SHEET
1a, 1b, 1c FIBER SHEET
10, 210, 310, 310A, 310B, 310C UNWINDING DEVICE
20, 220, 320 CONVEYING DEVICE
21, 22, 221, 222, 321, 322 CONVEYING ROLLER
30, 230, 330, 330A, 330B, 330C COATING DEVICE
31, 231, 331 DIE
32, 232, 332 MANIFOLD
33, 233, 333 SLIT
40, 240, 240B, 240C IMPREGNATION DEVICE
41, 42, 43, 44, 241, 252, 243, 244, 245, 341, 342, 343, 344, 345 ROLLER
51, 250, 371 DRYING DEVICE
52, 372 MELTING DEVICE
60, 260, 350 WINDING DEVICE
100, 100A, 200, 200A, 200B, 200C, 200D, 200E, 200F, 300, 300A, 300B PRODUCTION APPARATUS
230D COATING AND IMPREGNATION DEVICE
234, 235 GUIDE ROLLER
236 DOCTOR EDGE
237 BACK EDGE
250A FIRST DRYING DEVICE
251 SECOND DRYING DEVICE
A OUTLET OF COATING DEVICE
B INLET OF IMPREGNATION DEVICE
C OUTLET OF IMPREGNATION DEVICE
D INLET OF DRYING DEVICE
E OUTLET OF DRYING DEVICE
340 LAMINATING DEVICE
360, 360A, 360B, 360C FIBER SPREADER

## Claims

1. An apparatus for producing a slurry-impregnated sheet constituted of a fiber sheet or a porous sheet impregnated with a slurry prepared by dispersing particles in a solvent, the apparatus comprising:
a conveying device configured to convey the fiber sheet or the porous sheet;
a coating device configured to meter and apply the slurry to the fiber sheet or the porous sheet; and
an impregnation device disposed downstream of the coating device in a sheet conveying direction and configured to apply an external force to the fiber sheet or the porous sheet to impregnate the fiber sheet or the porous sheet with the particles, wherein
the coating device includes a die.

2. The apparatus for producing a slurry-impregnated sheet according to claim 1, wherein
the die includes:
a slurry supply channel configured to supply the slurry;
a manifold configured to communicate with the slurry supply channel and widen the slurry in a width direction of the fiber sheet or the porous sheet; and
a slit configured to communicate with the manifold and uniformly discharge the supplied slurry in the width direction, and
a flow direction of the slurry passing through the slit is a downward direction at an angle of 45° or less with respect to a vertical direction.

3. The apparatus for producing a slurry-impregnated sheet according to claim 2, wherein an angle formed between a bottom surface of the manifold and the vertical direction is 45° or less.

4. The apparatus for producing the slurry-impregnated sheet according to claim 1, wherein
in a sheet conveying path from an outlet of the coating device to an outlet of the impregnation device, an angle formed between a horizontal direction and a virtual straight line connecting a center of the outlet of the coating device in a sheet width direction and a center of an inlet of the impregnation device in the sheet width direction, and an angle formed between the horizontal direction and a virtual straight line connecting the center of the inlet of the impregnation device in the sheet width direction and a center of the outlet of the impregnation device in the sheet width direction are 30° or more and 90° or less, and
the fiber sheet or the porous sheet is conveyed through the impregnation device downward or obliquely downward in the vertical direction.

5. The apparatus for producing the slurry-impregnated sheet according to claim 4, further comprising
a drying device that is disposed downstream of the impregnation device in a conveyance direction of the fiber sheet or the porous sheet and configured to dry at least part of the solvent contained in the slurry, wherein
in a sheet conveying path from the impregnation device to the drying device, an angle formed between the horizontal direction and a virtual straight line connecting the center of the outlet of the impregnation device in the sheet width direction and a center of an inlet of the drying device in the sheet width direction, and an angle formed between the horizontal direction and a virtual straight line connecting the center of the inlet of the drying device in the sheet width direction and a center of an outlet of the drying device in the sheet width direction are 30° or more and 90° or less, and
the fiber sheet or the porous sheet is conveyed through the drying device downward or obliquely downward in the vertical direction.

6. The apparatus for producing a slurry-impregnated sheet according to claim 1, wherein
the conveying device is configured to independently convey a plurality of fiber sheets or a plurality of porous sheets,
the coating device is configured to independently meter and apply the slurry to the plurality of fiber sheets or the plurality of porous sheets, and
the apparatus further includes a laminating device disposed downstream of the coating device in a conveyance direction of the fiber sheet, and configured to laminate the plurality of fiber sheets or the plurality of porous sheets to form a single slurry-impregnated sheet.
